Europäisches Patentamt

European Patent Office

Office européen des brevets

(19)

(11) Veröffentlichungsnummer : **0 151 753**
**B1**

(12) # EUROPÄISCHE PATENTSCHRIFT

(45) Veröffentlichungstag der Patentschrift :
04.05.88

(21) Anmeldenummer.: 84115378.6

(22) Anmeldetag : 13.12.84

(51) Int. Cl.⁴ : **G 01 F 23/28**

(54) **Verfahren und Einrichtung zur Überwachung des Flüssigkeitsvolumens im Tank eines Fahrzeuges.**

(30) Priorität : 13.02.84 DE 3405080

(43) Veröffentlichungstag der Anmeldung :
21.08.85 Patentblatt 85/34

(45) Bekanntmachung des Hinweises auf die Patenterteilung : 04.05.88 Patentblatt 88/18

(84) Benannte Vertragsstaaten :
DE FR GB IT

(56) Entgegenhaltungen :
EP-A- 0 094 298
DE-A- 3 032 177
FR-A- 1 354 415
GB-A- 1 377 054
GB-A- 2 100 431
US-A- 4 306 525
PATENTS ABSTRACTS OF JAPAN, Band 6, Nr. 166 (P-138)[1044], 31. August 1982

(73) Patentinhaber : Siemens Aktiengesellschaft Berlin und München
Wittelsbacherplatz 2
D-8000 München 2 (DE)

(72) Erfinder : Schreiber, Hans, Dipl.-Ing.
Hönighausen 1c
D-8411 Hönighausen (DE)

## Beschreibung

Verfahren und Einrichtung zur Überwachung des Flüssigkeitsvolumens im Tank eines Fahrzeuges.

Die Erfindung betrifft ein Verfahren zur Überwachung des Flüssigkeitsvolumens im Tank eines Fahrzeuges durch Registrieren der Laufzeiten von Ultraschallimpulsen, die von einem Wandler im Boden des Tanks in periodischer Folge ausgesendet, an der Flüssigkeitsoberfläche reflektiert und vom Wandler wieder empfangen werden, der dann Laufzeitsignale in periodischer Folge an ein Auswerteglied abgibt, das aus Laufzeit und bekannter Tankform aufeinanderfolgende Volumenwerte bestimmt und diese einem Anzeigegerät zugeführt.

Zur Durchführung eines derartigen Verfahrens ist eine Einrichtung aus der GB-A-1 377 054 bekannt. Dabei sendet ein im Boden eines Tanks montierter Ultraschallwandler in periodischer Folge Ultraschallimpulse aus und empfängt die von der Flüssigkeitsoberfläche reflektierten Echos. Die ausgewertete Laufzeit ist hierbei ein Maß für die Füllhöhe. Bei bekannter Tankform läßt sich im Auswerteglied aus der Füllhöhe das zugehörige Flüssigkeitsvolumen bestimmen. Die Volumenwerte sind einem Anzeigegerät zuführbar.

Eine fortlaufende Überwachung des Flüssigkeitsvolumens mit der bekannten Einrichtung registriert auch alle sich während des Fahrzeugbetriebs ergebenden kurzfristigen Schwankungen der Füllhöhe, weshalb die Genauigkeit der Anzeige nicht gegeben ist. So wird die Flüssigkeit im Tank durch Beschleunigungskräfte, wie sie beim Anfahren, Bremsen oder in Kurven auftreten, in Schwingungen versetzt. Bei Bergfahrten ist der Flüssigkeitsspiegel im Tank relativ zum Fahrzeugboden und auch zur Ausbreitungsrichtung der Ultraschallimpulse geneigt.

Aus der DE-T-31 52 914 ist ein Verfahren bekannt, das Anzeigefehler durch eine Mittelwertbildung der Meßwerte über ein Zeitintervall zu vermeiden sucht, dessen Länge relativ groß ist und vom Fahrzustand des Fahrzeugs abhängt, was zu einer verzögerten Anzeige führt.

Der Erfindung liegt die Aufgabe zugrunde, das aus der GB-A1 377 054 bekannte Verfahren so weiterzubilden, daß durch äußere Kräfte ausgelöste Bewegungen des Tankinhalts nicht als Zunahme oder Abnahme des Inhalts registriert werden, ein Tankvorgang aber eindeutig erkannt wird.

Die Lösung dieser Aufgabe ist in Anspruch 1 gekennzeichnet.

Danach wird während der Fahrt ein neuer Volumenwert — nachfolgend Neuwert genannt — nur dann registriert und angezeigt, wenn die Differenz zwischen Neuwert und alten Volumenwert — nachfolgend Altwert genannt — einen Grenzwert nicht überschreitet. Dadurch wird der Vorteil erzielt, daß während der Fahrt eine scheinbare Volumenzunahme im Tank nicht registriert und auch eine Volumenabnahme nur dann gewertet wird, wenn das abfließende Volumen pro Zeiteinheit ein für den Kraftstoffverbrauch übliches Maß nicht übersteigt. Plötzliche Änderungen der Füllhöhe, beispielsweise durch Einwirkung äußerer Kräfte, bleiben somit unberücksichtigt.

Um einen Tankvorgang erfassen zu können, ist jedoch bei stehendem Fahrzeug eine Volumenzunahme zuzulassen. dafür wird der beim erneuten Start des Fahrzeuges bestimmte Neuwert nur dann registriert und angezeigt, wenn er größer als der Altwert nach dem Anhalten ist.

Beim Verfahren nach der Erfindung kann nach dem Anhalten nachschwingende Flüssigkeit im Tank die Volumenmessung nicht verfälschen. Eine Füllhöhenmessung wird statt unmittelbar nach dem Anhalten des Fahrzeuges erst um eine Zeitspanne verzögert nach dem Anhalten durchgeführt. Diese Zeitspanne ist so bemessen, daß sie. zum Glätten der Flüssigkeitsoberfläche im Tank ausreicht. Andererseits ist sie so kurz, daß ein möglicher Tankvorgang erst nach dem Verstreichen dieser Zeitspanne beginnen kann.

Mit dem Verfahren nach der Erfindung wird insbesondere der Vorteil erzielt, daß eine Volumenzunahme auch nach einem Parken am Berg eindeutig nur dann registriert wird, wenn Flüssigkeit nachgefüllt wurde : Wenn das Fahrzeug am Berg abgestellt wird, ergibt die Volumenmessung nach Glätten der Flüssigkeitsoberfläche je nach Schräglage des Fahrzeugs einen überhöhten oder zu niedrigen Altwert, .der jedoch dem nach dem erneuten Start gemessenen Neuwert entspricht, wenn nicht getankt wurde. Angezeigt wird in diesem Fall der vor dem Anhalten zuletzt gemessene und registrierte Altwert.

Eine Einrichtung zur Durchführung des Verfahrens weist ein Auswerteglied auf, das über ein Verzögerungsglied mit einem Betriebssensor des Fahrzeugs verbunden ist. Dieser kann ein Zustandsgeber am Zündschloß, eine Klemme, sein. Ein solcher Betriebssensor sendet immer dann ein Signal aus, wenn das Fahrzeug anhält.

Nach einer Weiterbildung der Erfindung sendet der Wandler für jede Messung der Füllhöhe eine begrenzte Zahl von Ultraschallimpulsen aus und empfängt die reflektierten Impulse. Im Auswerteglied wird dann der Mittelwert der Laufzeiten gebildet und bei bekannter Tankform aus der mittleren Laufzeit ein Volumenwert bestimmt. Durch die Mittelwertbildung wird eine höhere Meßgenauigkeit erzielt.

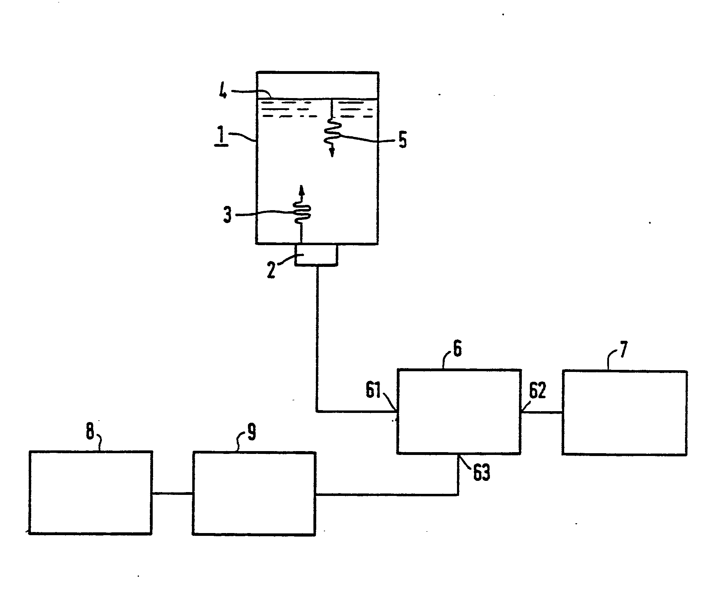

Ein Ausführungsbeispiel der Erfindung wird anhand der Zeichnung erläutert :

Ein Treibstofftank 1 in einem Kraftfahrzeug weist in seinem Boden einen Wandler 2 auf, der Ultraschallimpulse 3 aussendet und an der Flüssigkeitsoberfläche 4 im Tank 1 reflektierte Impulse 5 empfängt. Der Wandler 2 ist mit dem Eingang 61 eines Auswertegliedes 6 verbunden, dem der Wandler 2 Laufzeitsignale zuleitet. Ein Ausgang 62 des Auswertegliedes 6 steht mit einem Anzeigegerät 7 für die im Auswerteglied 6 ermittelten Volumenwerte in Verbindung.

Eine Klemme am Zündschloß 8 steht als Zustandsgeber über ein Verzögerungsglied 9 mit einem Trigger-Eingang 63 des Auswerteglieds 6 in Verbindung und gibt unmittelbar nach dem Anhalten des Fahrzeugs ein Signal ab. Das Verzögerungsglied 9 verzögert das Signal um eine Zeitspanne, die zum Glätten der Oberfläche 4 der im Tank 1 nach dem Anhalten noch schwingenden Flüssigkeit ausreicht. Diese Zeitspanne kann etwa fünf Sekunden betragen.

Im Auswerteglied wird die Differenz aus dem Neuwert und dem zuletzt registrierten Volumenwert, dem Altwert, bestimmt. Während der Fahrt wird nur nach einer Volumenabnahme, die einen vorgegebenen Grenzwert nicht überschreitet, der Neuwert registriert und dem Anzeigegerät 7 zugeführt. Im getriggerten Auswerteglied 6 wird. auch nach einer Volumenzunahme ein Neuwert registriert, aber nur nach einem Tankvorgang durch das Anzeigegerät 7 als neues Flüssigkeitsvolumen angezeigt.

## Patentansprüche

1. Verfahren zur Überwachung des Flüssigkeitsvolumens im Tank (1) eines Fahrzeuges durch Registrieren der Laufzeiten von Ultraschallimpulsen (3, 5), die von einem Wandler (2) im Boden des Tanks (1) in periodischer Folge ausgesendet, an der Flüssigkeitsoberfläche (4) reflektiert und vom Wandler (2) wieder empfangen werden, der dann Laufzeitsignale in periodischer Folge an ein Auswerteglied (6) abgibt, das aus Laufzeit und Tankform aufeinander folgende Volumenwerte bestimmt und diese einem Anzeigegerät (7) zuführt, dadurch gekennzeichnet, daß der jeweils neu ermittelte Volumenwert — Neuwert — mit dem vorhergehenden Volumenwert — Altwert — verglichen und nur dann registriert und angezeigt wird, wenn der Neuwert

- während der Fahrt des Fahrzeuges kleiner als der Altwert ist, und die Differenz zwischen Neuwert und Altwert einen Grenzwert nicht überschreitet ;
- beim Start des Fahrzeuges größer als der Altwert ist, der um eine Zeitspanne verzögert nach dem letzten Anhalten des Fahrzeuges ermittelt und registriert wurde, wobei die Zeitspanne so bemessen ist, daß sie zum Glätten der Oberfläche der Flüssigkeit im Tank ausreicht.

2. Verfahren nach Anspruch 1, dadurch gekennzeichnet, daß eine begrenzte Folge von Ultraschallimpulsen (3, 5) ausgesendet und das dem Mittelwert der Laufzeiten entsprechende Volumen bestimmt und dem Anzeigegerät (7) zugeführt wird.

3. Einrichtung zur Durchführung des Verfahrens nach Anspruch 1 oder 2 mit einem im Boden eines Tanks (1) angeordneten Wandler (2) zum Aussenden und Empfangen von Ultraschallimpulsen (3, 5), der mit einem Eingang (61) eines Auswertegliedes (6) verbunden ist, dessen Ausgang (62) mit einem Anzeigegerät (7) in Verbindung steht, dadurch gekennzeichnet, daß ein Betriebssensor (8) des Fahrzeugs über ein Verzögerungsglied (9) mit dem Auswerteglied (6) an einem Triggereingang (63) in Verbindung steht.

4. Einrichtung nach Anspruch 3, dadurch gekennzeichnet, daß als Betriebssensor (8) ein Zustandsgeber am Zündschloß des Fahrzeugs dient, der über das Verzögerungsglied (9) mit dem Auswerteglied (6) in Verbindung steht.

## Claims

1. A process for monitoring the volume of liquid in the tank (1) of a vehicle by registering the echo times of ultrasonic pulses (3, 5), which are emitted in periodic succession from a transducer (2) in the bottom of the tank (1), reflected at the surface of the liquid (4) and received back by the transducer (2), which then sends echo time signals in periodic succession to an evaluation element (6) which determines successive volume values from echo time and tank shape and supplies these to a display device (7), characterised in that each newly determined volume value — new value — is compared with the previous volume value — old value — and is only registered and displayed when the new value

- is smaller than the old value while the vehicle is moving, and the difference between new value and old value does not exceed a limit value ;
- is greater than the old value when the vehicle is started, which value was determined and registered after the last halting of the vehicle, delayed by a time interval, the time interval being calculated so as to be sufficient for the smoothing of the surface of the liquid in the tank.

2. A process according to Claim 1, characterised in that a limited succession of ultrasonic pulses (3, 5) is emitted and that the volume corresponding to the mean value of the echo times is determined and supplied to the display device (7).

3. Apparatus for executing the process according to Claim 1 or 2 with a transducer (2), in the bottom of a tank (1), for emitting and receiving ultrasonic pulses (3, 5), which is connected to an input (61) of an evaluation element (6), the output (62) of which is in connection with a display device (7), characterised in that an operation sensor (8) of the vehicle is in connection with the evaluation element (6) at a trigger input (63) via a delay element (9).

4. Apparatus according to Claim 3, characterised in that a status transmitter at the ignition lock of the vehicle serves as operation sensor (8), which status transmitter is in connection with the evaluation element (6) via the delay element (9).

## Revendications

1. Procédé pour contrôler le volume de liquide dans le réservoir (1) d'un véhicule, par enregistrement de temps de propagation d'impulsions ultrasonores (3, 5), qui sont émises selon une suite périodique par un transducteur (2) placé dans le fond du réservoir (1), sont réfléchies sur la surface (4) du liquide et sont à nouveau reçues par le transducteur (2), qui envoie alors des signaux de temps de propagation selon une suite périodique à un circuit d'évaluation (6), qui détermine, à partir du temps de propagation et de la forme du réservoir, des valeurs de volume successives et les envoie à un appareil d'affichage (7), caractérisé par le fait que la valeur de volume respective nouvellement déterminée — la nouvelle valeur — est comparée à la valeur de volume antérieure — l'ancienne valeur — et n'est enregistrée et affichée que lorsque la nouvelle valeur

- est inférieure à l'ancienne valeur pendant le déplacement du véhicule et que la différence entre la nouvelle valeur et l'ancienne valeur ne dépasse pas une valeur limite ;

- est, au démarrage du véhicule, supérieure à l'ancienne valeur, qui a été déterminée et enregistrée en étant retardée d'un certain intervalle de temps après le dernier arrêt du véhicule, auquel cas l'intervalle de temps est dimensionné de manière à être suffisant pour obtenir un lissage de la surface du liquide dans le réservoir.

2. Procédé suivant la revendication 1, caractérisé par le fait qu'une suite limitée d'impulsions ultrasonores (3, 5) est émise et que le volume, qui correspond à la valeur moyenne des temps de propagation, est déterminé et est envoyé à l'appareil d'affichage (7).

3. Dispositif pour la mise en œuvre du procédé suivant la revendication 1 ou 2, comportant un transducteur (2) placé dans le fond d'un réservoir (1) et servant à émettre et recevoir des impulsions ultrasonores (3, 5) et est relié à une entrée (61) d'un circuit d'évaluation (6), dont la sortie (62) est reliée à un appareil d'affichage (7), caractérisé par le fait qu'un capteur de fonctionnement (8) du véhicule est relié par l'intermédiaire d'un circuit de retard (9) à une entrée de déclenchement (63) du circuit d'évaluation (6).

4. Dispositif suivant la revendication 3, caractérisé par le fait qu'on utilise, comme capteur de fonctionnement (8), un transmetteur d'état monté dans l'interrupteur d'allumage et relié par l'intermédiaire du circuit de retard (9) au circuit d'évaluation (6).